# FASCICULE DE BREVET EUROPEEN

(11) **EP 1 454 923 B1**
(45) Date de publication et mention de la délivrance du brevet: **02.11.2006**
(21) Numéro de dépôt: 04290393.0
(22) Date de dépôt: 13.02.2004
(51) Int. Cl.: C08F 6/24, C08J 3/205, C08K 5/098

(54) **Procédé de fabrication de PVDF thérmiquement stable**
Verfahren zur Herstellung von thermisch stabilem PVDF
Process for preparation of thermally stable PVDF

(30) Priorité: 03.03.2003 FR 0302532
(43) Date de publication de la demande: 08.09.2004
(73) Titulaire: Arkema France, 92800 Puteaux (FR)
(72) Inventeur: Kappler, Patrick, 69130 Ecully (FR); Gauthe, Véronique, 69360 Ternay (FR)
(74) Mandataire: Neel, Henry

(56) Documents cités:
- FR-A- 2 804 438
- US-A- 4 025 709

## Description

### Domaine de l'invention

Les polymères à base de fluorure de vinylidène CF2=CH2 (VDF) tels que par exemple le PVDF (polyfluorure de vinylidène) sont connus pour offrir d'excellentes propriétés de stabilité mécanique, une très grande inertie chimique, ainsi qu'une bonne résistance au vieillissement. Ces qualités sont exploitées pour des domaines d'application variés. On citera par exemple, la fabrication de pièces extrudées ou injectées pour l'industrie du génie chimique ou la microélectronique, l'utilisation sous forme de gaine d'étanchéité pour le transport des gaz ou des hydrocarbures, l'obtention de films ou de revêtements permettant la protection dans le domaine architectural, et la réalisation d'éléments protecteurs pour des usages électrotechniques.

La présente invention concerne un procédé de fabrication de PVDF homopolymère ou copolymère, plus précisément un procédé par polymérisation radicalaire du fluorure de vinylidène (VDF), et éventuellement d'un comonomère, en dispersion aqueuse en utilisant un persulfate comme initiateur (aussi appelé amorceur). On effectue la polymérisation éventuellement en présence d'un additif tensioactif encore appelé émulsifiant ou surfactant. On effectue un lavage de la dispersion de PVDF obtenue à l'issue de la polymérisation puis on ajoute de l'acétate de sodium et éventuellement un alkylsulfonate de potassium. Le PVDF obtenu doit contenir le moins possible de cet émulsifiant et en général de l'ordre de 300 ppm au plus.

### L'art antérieur et le problème technique

Le brevet **US 4025709** décrit la polymérisation du VDF en présence de persulfate de potassium comme initiateur, d'acétate de sodium et d'un additif dispersant qui peut être un perfluorooctanoate de sodium (ex 1-3) ou un sulfonate de formule Rf-C₂H₄-SO₃M dans laquelle M désigne un métal alcalin ou l'ammonium. La proportion d'additif dispersant par rapport au PVDF formé est comprise entre 550 et 2200 ppm. Le PVDF est obtenu sous forme d'un latex qu'on sèche à l'étuve ou qu'on sépare par centrifugation pour obtenir le PVDF. Il n'y a pas de lavage du latex, le PVDF contient donc entre 550 et 2200 ppm d'additif dispersant. Avec ce mode de séchage l'additif tensioactif n'est pas éliminé ou est très partiellement éliminé contrairement à l'invention revendiquée.

Le brevet **EP 169328 (US 4569978)** décrit la polymérisation du VDF en présence de Diisopropyl peroxydicarbonate (IPP) comme initiateur et il n'y a pas d'acétate de sodium. Le brevet **EP 816397** décrit un procédé similaire au précédent sauf que l'initiateur est du peroxyde de ditertiobutyle.

Le brevet **EP 387938** décrit la polymérisation du VDF en présence de persulfate d'ammonium comme initiateur, d'acétate d'éthyle comme agent de transfert de chaîne mais sans acétate de sodium ni additif dispersant.

Le brevet **US 5955556** décrit la polymérisation du VDF en présence d'un couple oxydant-réducteur mais sans additif dispersant ni acétate de sodium. L'oxydant peut être un persulfate.

Le PVDF fabriqué selon les procédés décrits plus haut présente une stabilité thermique insuffisante pour des applications qui requièrent une transformation par extrusion, moulage par compression ou injection.

L'art antérieur a aussi décrit l'incorporation de sels dans le PVDF pour le stabiliser thermiquement. Le brevet **FR 1298572** décrit du PVDF contenant des sels de baryum ou de strontium. Le brevet **US 3728303** décrit la polymérisation du VDF en présence de persulfate d'ammonium comme initiateur mais sans additif dispersant. On ajoute ensuite dans le PVDF du chlorure ou du chlorate de sodium ou de potassium. Le brevet **EP 870792** décrit la polymérisation du VDF en présence de persulfate comme initiateur et d'un additif dispersant qui est du perfluorooctanoate d'ammonium. On ajoute du nitrate de potassium soit au cours de la polymérisation du VDF soit dans le PVDF avant son introduction dans une extrudeuse. La demande de brevet **BE 9600257 (US 5929152)** décrit l'amélioration de la stabilité du PVDF par l'addition d'un sel de bismuth. La demande **FR 2804438** décrit un procédé de préparation d'un polymère fluoré en émulsion aqueuse en présence d'un surfactant fluoré. L'addition d'acétate de sodium n'est pas suggérée.

On a maintenant trouvé qu'en effectuant la polymérisation en dispersion aqueuse en utilisant un persulfate comme initiateur et qu'en ajoutant de l'acétate de sodium et éventuellement un alkylsulfonate de potassium on obtenait un PVDF très stable thermiquement à condition que la stabilité thermique ne soit pas dégradée par des résidus indésirables de tensioactif. On effectue la polymérisation éventuellement en présence d'un additif tensioactif pour augmenter la quantité de PVDF produite par batch de polymérisation mais dans ce cas le PVDF obtenu doit contenir un niveau d'additif tensioactif résiduel suffisamment faible pour ne pas affecter la stabilité thermique. La teneur en additif tensioactif doit être inférieure à 300 ppm en poids par rapport au PVDF pour éviter une détérioration de la stabilité thermique. Pour arriver à ce niveau faible de résidu tensioactif on a découvert qu'il suffisait d'effectuer une coagulation de la dispersion aqueuse de PVDF obtenue à l'issue de sa polymérisation suivie d'un lavage à l'eau. Puis on ajoute l'acétate de sodium et éventuellement un alkylsulfonate de potassium dans la dispersion de PVDF et on récupère par séchage le PVDF en poudre.

### Brève description de l'invention

La présente invention concerne un procédé de fabrication de PVDF homopolymère ou copolymère par polymérisation radicalaire du fluorure de vinylidène (VDF), et éventuellement d'un comonomère, en dispersion aqueuse en présence d'un agent de transfert, d'un persulfate comme initiateur radicalaire, éventuellement d'un additif tensioactif, éventuellement d'une paraffine, dans lequel :
a) on obtient une dispersion aqueuse de PVDF,
b) on effectue un lavage de la dispersion de l'étape a), éventuellement après l'avoir coagulée, pour abaisser la proportion de tensioactif éventuel dans le PVDF en dessous de 300 ppm, cette proportion étant exprimée par rapport au PVDF seché,
c) on ajoute dans la dispersion lavée en b) de l'acétate de sodium et éventuellement un alkylsulfonate de potassium,
d) on sèche par tout moyen la dispersion de l'étape c) pour récupérer le PVDF en poudre contenant l'acétate de sodium et éventuellement un alkylsulfonate de potassium.

On obtient ainsi un PVDF contenant de l'acétate de sodium, éventuellement un alkylsulfonate de potassium et contenant moins de 300 ppm d'additif tensioactif. Il contient aussi des extrémités de chaîne :

―CF₂―CH₂―O―SO₃^{⊖}

provenant de l'utilisation du persulfate comme initiateur. Ce PVDF est très stable thermiquement. La présente invention concerne aussi ce PVDF en tant que produit nouveau.

Selon la nature de l'additif tensioactif et ses proportions le procédé est dit "en émulsion", ou tous autres procédés dérivés de l'émulsion (microsuspension, miniémulsion...) réalisable avec du persulfate comme amorçeur, lesquels sont parfaitement connus par l'homme de l'art. Après la fin de la polymérisation on sépare le PVDF de l'eau et des restes éventuels des réactifs engagés.

Dans le cas des procédés type émulsion, le polymère se présente sous la forme d'un latex composé de particules très fines, dont le diamètre moyen est généralement inférieur à 1 micron. Ce latex peut être coagulé et éventuellement concentré en éliminant une partie de l'eau par exemple par centrifugation. Certains additifs tensioactif éventuellement utilisés à la polymérisation peuvent entraîner une dégradation de la stabilité thermique s'ils restent présents dans le PVDF. Puis on peut sécher le latex et simultanément éliminer le tensioactif en le mettant au contact d'un gaz chaud dans un atomiseur et on recueille le PVDF en poudre. Cette technique est connue et utilisée dans les procédés de fabrication du PVDF.

Il peut néanmoins être nécessaire de faire un lavage dans le cas de tensioactifs à faible tension de vapeur ou lorsque la récupération des résidus de tensioactif dans les effluents gazeux de l'atomiseur présente des difficultés. Les techniques de lavage sont connues en elles mêmes. Un latex peut être coagulé par ajout de sel et l'eau éliminée par centrifugation ou filtration. Cette opération peut être répétée après ajout d'eau pure. Dans une autre technique le latex est dilué puis introduit dans un coagulateur ou il est soumis à un cisaillement en présence d'air. Sous l'effet cumulé de ces deux actions, le latex se transforme en crème aérée d'une densité inférieure à celle de l'eau.

Cette crème est éventuellement lavée à contre-courant avec de l'eau déionisée par exemple selon le procédé décrit dans les brevets US 4,128,517 et EP 0 460 284. Le lavage à l'eau permet de débarrasser le latex du tensioactif qui était nécessaire pour la polymérisation ou au moins de fortement réduire sa proportion par rapport au PVDF.

On ajoute ensuite l'acétate de sodium et l'alkylsulfonate de potassium éventuel. La dispersion de PDVF lavée contenant l'acétate de sodium et l'alkylsulfonate de sodium peut être séchée par tout procédé de séchage. Le séchage par atomisation ou séchage dans un sécheur rotatif conviennent particulièrement.

Selon une forme avantageuse l'invention est un procédé discontinu ou semi-continu de fabrication de PVDF homopolymère ou copolymère dans lequel :
- on charge le réacteur de polymérisation avec de l'eau, l'additif tensioactif éventuel et éventuellement une paraffine,
- le réacteur est désaéré pour éliminer l'oxygène,
- le réacteur est porté à la température choisie et on charge le VDF et le monomère éventuel jusqu'à atteindre la pression voulue,
- l'agent de transfert est introduit dans le réacteur soit en totalité soit en partie au départ et en partie au cours de la polymérisation,
- on ajoute le persulfate (l'initiateur) en totalité ou en partie pour démarrer la polymérisation et la baisse de pression qui en résulte est compensée par l'ajout de VDF et du comonomère éventuel,
- le reste éventuel de l'initiateur est ajouté au cours de la polymérisation,
- après introduction de la quantité prévue de VDF et de comonomère éventuel le réacteur est dégazé et on obtient une dispersion aqueuse de PVDF,
- on effectue un lavage de la dispersion aqueuse de PVDF éventuellement après l'avoir coagulée, pour abaisser la proportion de tensioactif éventuel dans le PVDF en dessous de 300 ppm, cette proportion étant exprimée par rapport au PVDF seché,
- on ajoute dans la dispersion lavée de l'acétate de sodium et éventuellement un alkylsulfonate de potassium,
- on sèche par tout moyen la dispersion de l'étape précédente pour récupérer le PVDF en poudre contenant l'acétate de sodium et éventuellement un alkylsulfonate de potassium.

La température choisie est la température suffisante pour polymériser le VDF et est de l'ordre de 45 à 130°C et avantageusement entre 70 et 90°C. La pression voulue est de l'ordre de 35 à 125 bars.

Le volume d'eau dans lequel on réalise la dispersion des monomères, les quantités d'additif dispersant, d'initiateur et d'agent de transfert sont déterminables facilement par l'homme de métier. On effectue la polymérisation dans un réacteur agité.

### Description détaillée de l'invention

**S'agissant du comonomère fluoré éventuel** il est avantageusement choisi parmi les composés contenant un groupe vinyle capable de s'ouvrir par l'action de radicaux libres pour se polymériser et qui contiennent, directement attaché à ce groupe vinyle, au moins un atome de fluor, un groupe fluoroalkyle ou un groupe fluoroalkoxy. A titre d'exemple de comonomère on peut citer le fluorure de vinyle; le trifluoroethylene (TRFE); le chlorotrifluoroethylene (CTFE); le 1,2-difluoroethylene; le tetrafluoroethylene (TFE); l'hexafluoropropylene (HFP); les perfluoro(alkyl vinyl) ethers tels que le perfluoro(methyl vinyl)ether (PMVE), le perfluoro(ethyl vinyl) ether (PEVE) et le perfluoro(propyl vinyl) ether (PPVE); le perfluoro(1,3 -dioxole); le perfluoro(2,2-dimethyl- 1,3 -dioxole) (PDD); le produit de formule CF₂=CFOCF₂CF(CF₃)OCF₂CF₂X dans laquelle X est SO₂F, CO₂H, CH₂OH, CH₂OCN ou CH₂OPO₃H; le produit de formule CF₂=CFOCF₂CF₂SO₂F; le produit de formule F(CF₂)ₙCH₂0CF=CF₂ dans laquelle n est 1, 2, 3, 4 or 5; le produit de formule R₁CH₂OCF=CF₂ dans laquelle R₁ est l'hydrogene ou F(CF₂)z et z vaut 1, 2, 3 ou 4; le produit de formule R₃OCF=CH₂ dans laquelle R₃ est F(CF₂)z- et z est 1, 2, 3 or 4; le perfluorobutyl ethylene (PFBE); le 3,3,3-trifluoropropene et le 2-trifluoromethyl-3 ,3 ,3 -trifluoro- 1 -propene. On peut utiliser plusieurs comonomères. S'agissant du PVDF copolymère la proportion de VDF est d'au moins 60% en poids pour 40% de comonomère et de préférence d'au moins 85% en poids pour 15% de comonomère. Le comonomère est avantageusement choisi parmi l'HFP, le CTFE, le TFE et le TRFE.

**S'agissant du tensioactif**, dans les procédés en émulsion on utilise avantageusement un tensioactif ionique dérivé d'un acide ou une d'une base organique. Les brevets US 4025709, US 4569978, US 4360652, EP 626396 et EP 0655468 décrivent les procédés de synthèse du PVDF par mise en émulsion aqueuse du VF₂ et sa polymérisation, on y trouve de nombreuses formules de tensioactifs.

A titre d'exemple on peut citer ceux de formule générale : ZCₙF₂ₙCOOM dans laquelle Z est un atome de fluor ou de chlore, n est un nombre entier valant 6 à 13 et M est un atome d'hydrogène ou de métal alcalin ou un groupe ammonium ou un groupe ammonium comportant au moins un substituant alkyle inférieur.

On peut encore citer les perfluoroalkanoates de lithium de formule F₃C(CF₂)ₙ₋₂CO₂Li où n = 7, 8, 9 et 10.

La quantité totale de tensioactif introduite, au départ ou en cours de polymérisation, peut être comprise entre 0 et 5000 ppm du PVDF fabriqué (sensiblement égal à la charge totale de monomères fluorés mis en oeuvre).

Avantageusement on utilise le perfluorooctanoate d'ammonium et le perfluorononanoate d'ammonium ou leur mélanges, c'est à dire le produit de formule ZCₙF₂ₙCOOM dans laquelle Z est F, M l'ammonium et n moyen est compris entre 8 et 9.

La proportion de tensioactif dans le PVDF est déterminée par analyse RMN.

**Avantageusement on ajoute aussi, en plus du tensioactif, une paraffine.** La paraffine mise en oeuvre a un point de fusion allant de 40 à 70°C et représente de 0,005 à 0.05 % en poids par rapport au poids total des monomères fluorés.

**S'agissant de l'amorceur et donc le persulfate ,** c'est avantageusement un persulfate alcalin et de préférence un persulfate de potassium ou d'ammonium.

Avantageusement l'amorceur (ou initiateur radicalaire) mis en oeuvre représente de 50 à 600 ppm et de préférence 100 à 400 ppm en poids par rapport au poids total du ou des monomères fluorés mis en oeuvre.
L'analyse RMN a mis en évidence des extrémités de chaîne :

―CF₂―CH₂―O―SO₃^{⊖}

Il est possible de quantifier le nombre de ces extrémités de chaîne par le rapport de leur nombre ramené à 1000 motifs de VDF. Ce taux dépend des masses moléculaires et de la quantité de persulfate utilisé. Le polymère selon l'invention a un taux d'extrémités de chaînes telles que citées plus haut compris entre 0.01 et 0,08 pour 1000 motifs VDF.

**S'agissant de l'agent de transfert,** on désigne ainsi tout produit qui permet de limiter la masse molaire du polymère tout en propageant la réaction de polymérisation. Les agents de transfert décrits dans l'art antérieur de la préparation du PVDF conviennent. Il présente le plus souvent une liaison hydrogène sensible à une attaque radicalaire. A titre d'exemple on peut citer l'acétone, l'isopropanol, l'acétate de méthyle, l'acétate d'éthyle, le diethylether, le méthyltertiobutyle ether, l'acétate de n-butyle, le malonate de diéthyle et le carbonate de diéthyle et différents composés chlorofluorocarbonés. La quantité d'agent de transfert dépend essentiellement de sa nature et de la masse molaire moyenne désirée pour la fraction de polymère obtenue en sa présence, laquelle conditionne la viscosité moyenne du produit final. De préférence, l'agent de transfert mis en oeuvre représente de 0,05 à 5 % en poids par rapport au PVDF fabriqué. Avantageusement on utilise l'acétate d'éthyle.

Le phénomène de terminaison de chaînes génère des terminaisons - CH₂-CF₂H et -CF₂-CH₃ parfaitement identifiables. Le radical issu de la réaction de transfert réinitie de nouvelles chaînes dans des proportions plus importantes que les radicaux générés par la décomposition du persulfate c'est la raison pour laquelle les extrémités :

―CF₂―CH₂―O―SO₃^{⊖}

ne représentent que 0,3 à 1% de l'ensemble des extrémités de chaîne détectables.

**S'agissant de l'acétate de sodium** on utilise avantageusement l'acétate trihydrate CH₃-COONa, 3H₂O. La proportion exprimée en trihydrate est avantageusement comprise entre 50 et 600 ppm par rapport au PVDF fabriqué. Le sodium amené par l'acétate de sodium est mesurable par fluorescence X. Il est exprimé dans le tableau 2 en ppm pondéral de sodium par rapport au PVDF.

**S'agissant de l'alkyle sulfonate de potassium** (R-SO₃K) la proportion en poids par rapport au PVDF fabriqué peut être comprise entre 0 et 300 ppm. Les groupes alkyles R de ce sulfonate sont linéaires ou ramifiés et ont de 1 à 11 atomes de carbone. On préfère l'éthyle, le méthyle, l'isopropyle et le n-propyle. La proportion d'alkyle sulfonate dans le PVDF est déterminée par analyse RMN.

**Évaluation de la stabilité thermique :** A partir de 40g de poudre (de PVDF) on forme par moulage par compression sous 30 bars et à 205°C pendant 6 minutes une plaque de 260x20x4mm qui est soumise à une trempe à l'eau à 20°C. La plaque est ensuite réchauffée dans un four Metrastat® PSD 260 à 265°C pendant 1h. Après ce traitement thermique la plaque peut être plus ou moins colorée. La couleur est déterminée par une mesure de jaunissement. La plaque est mise sur une céramique blanche calibrée et l'indice de jaunissement est mesuré à l'aide d'un colorimètre de marque Minolta® CR 200 en utilisant la norme ASTM D 1925 pour le calcul de l'indice de jaune.

On évalue aussi la stabilité thermique par un moulage de plaque. La poudre issue du séchage du latex est granulée dans une extrudeuse CLEXTRAL® BC 21 double vis corotative à une température de 230°C et une vitesse de rotation de 120 tours par minute. Une filière à jonc permet de faire des granulés de 4 mm. A l'aide de ces granulés des plaques de 65 mm de diamètre et 3 mm d'épaisseur sont pressées à 230°C pendant 9 min et 120 min à une pression de 20 bars. La coloration des plaques est mesurée à l'aide d'un colorimètre de marque Minolta® CR 200 en utilisant la norme ASTM D 1925 pour le calcul de l'indice de jaune.

### Exemples

### Exemple comparatif 1

Dans un réacteur de 30 litres sont introduits à température ambiante :
- 17 litres d'eau déionisée,
- 2 g de paraffine de point de fusion égal à 60°C,
- 52.8 g d'une solution à 15% de perfluorooctanoate d'ammonium.
   Après fermeture et désaération le réacteur est mis sous agitation et chauffé à 83°C. Après introduction de 88 g d'acétate d'éthyle le réacteur est pressurisé à 45 bars avec du VDF. Après injection de 300 g d'une solution de persulfate de potassium à 0,5% en poids, la polymérisation démarre et la pression est maintenue à 45 bars par du VDF. Après introduction de 1500 g de VDF on rajoute 100 g d'une solution de persulfate de potassium à 0,5% en poids. Après introduction de 8500 g de VDF au total (temps= 4h30) on laisse baisser la pression jusqu'à 15 bars et on dégaze le monomère résiduaire. Le latex est filtré. Le poids de latex obtenu est de 26,4 kg. Le taux de matières sèches (ou extrait sec) est de 30%.

Le latex est coagulé et lavé avant d'être atomisé,ce qui le débarrasse de tous les résidus de polymérisation hydrosolubles. La coagulation et le lavage sont effectués selon l'enseignement du brevet US 4128517. Le latex est dilué de manière à avoir un taux de solide de 12%, puis introduit dans un coagulateur de 12 litres à un débit de 18l/h. On introduit simultanément de l'air avec un débit de 15 l/h. Le latex est coagulé par le cisaillement produit par la turbine (vitesse de bout de pale 12 m/s) et transformé en crème de densité inférieure à celle de l'eau. Cette crème est introduite dans une colonne de lavage de 14 litres alimentée en tête par un débit de 140 l/h. La bouillie de latex coagulé et lavé sortant de la colonne de lavage est introduite dans un récipient intermédiaire à partir duquel elle est envoyée dans un atomiseur de 1 m3. La température de l'air à l'entrée de l'atomiseur est de 140°C et de 85°C à la sortie. La poudre obtenue est ensuite granulée à l'aide d'une extrudeuse CLEXTRAL® BC 21 à 230°C, 120 tr/min.

### Exemple 1

Le latex est le même que dans l'exemple comparatif 1 et est soumis à une opération de coagulation lavage . La seule différence est que l'on rajoute après coagulation et lavage une solution aqueuse contenant 15g par litre d'acétate de sodium trihydrate et 5g par litre d'ethyle sulfonate de potassium en continu dans le conduit d'alimentation de l'atomiseur. Le débit d'alimentation de cette solution est proportionnel au débit d'alimentation en PVDF de manière à respecter un rapport acétate de sodium trihydrate sur PVDF de 0.00025

### Exemple comparatif 2

Le latex est le même que dans l'exemple comparatif 1.

Le latex est d'abord coagulé. Il est dilué de manière à avoir un taux de solide de 12%, puis introduit dans un coagulateur de 12 litres à un débit de 18l/h. On introduit simultanément de l'air avec un débit de 15 l/h. Le latex est coagulé par le cisaillement produit par la turbine (vitesse de bout de pale 12 m/s) et transformé en crème de densité inférieure à celle de l'eau. La dispersion coagulée est ensuite diluée de manière à ramener le taux de solide à 6%. La bouillie de latex coagulé, se concentre jusqu'à 20% de taux de solide par gravité au dessus d'une phase aqueuse qui est ensuite éliminée par soutirage. Cette façon d'opérer n'est pas assez efficace pour diminuer le taux d'émulsifiant résiduaire à moins de 300 ppm. On ajoute à la dispersion ainsi obtenue une solution aqueuse contenant 15g par litre d'acétate de sodium trihydrate et 5g par litre d'éthyle sulfonate de potassium. La quantité de solution ajoutée est de 0.017 litre par kilogramme de PVDF sec. La dispersion ainsi additivée est séchée dans une étuve ventilée à 80°C pendant 12 heures.

### Exemple 2

Dans un réacteur de 30 litres sont introduits à température ambiante :
- 17 litres d'eau déionisée,
- 2 g de paraffine de point de fusion égal à 60°C,
- 52.8 g d'une solution à 15% de perfluorooctanoate d'ammonium.
   Après fermeture et désaération le réacteur est mis sous agitation et chauffé à 83°C. Après introduction de 22.5 g d'acétate d'éthyle le réacteur est pressurisé à 45 bars avec du VDF. Après injection de 300 g d'une solution de persulfate de potassium à 0,5% en poids, la polymérisation démarre et la pression est maintenue à 45 bars par du VDF. On introduit en cours de polymérisation 125g d'acétate d'éthyle et 220 g d'une solution à 0.5% de persulfate de potassium . Après introduction de 8500 g de VDF au total (temps= 4h20) on laisse baisser la pression jusqu'à 15 bars et on dégaze le monomère résiduaire. Le latex est filtré. Le poids de latex obtenu est de 26 kg. Le taux de matières sèches (ou extrait sec) est de 29%.

On rajoute après coagulation et lavage effectués comme dans l'exemple comparatif 1 une solution aqueuse contenant 15g par litre d'acétate de sodium trihydrate et 7.5g par litre d'ethyle sulfonate de potassium en continu dans le conduit d'alimentation de l'atomiseur. Le débit d'alimentation de cette solution est proportionnel au débit d'alimentation en PVDF de manière à respecter un rapport acétate de sodium trihydrate sur PVDF de 0.00025
La bouillie de PVDF est atomisée dans les mêmes conditions que dans l'exemple comparatif 1.

Les résultats sont sur les tableaux 1 et 2 ci après.

**Tableau 1**

| exemple | eau (kg) | VDF total (kg) | tensioactif (g) | pression (bars) | persulfate (g) | acétate de sodium (g) | éthyle de K (g) | PVDF (kg) | extrait sec | temps de poly. |
|---|---|---|---|---|---|---|---|---|---|---|
| Comp 1 | 17 | 8500 | 7.9 | 45 | 2 | 0 | 0 | 7900 | 30% | 4h30 |
| 1 | 17 | 8500 | 7.9 | 45 | 2 | 2 | 0.6 | 7900 | 30% | 4h30 |
| 2 | 17 | 8500 | 7.9 | 45 | 2.1 | 2.1 | 1,30 | 7900 | 29% | 4h20 |
| Comp 2 | 17 | 8500 | 7.9 | 45 | 2 | 2 | 0.66 | 7900 | 30% | 4h30 |

**Tableau 2**

| exemple | caractérisation analytique des granulés | | | | stabilité thermique YI | | |
|---|---|---|---|---|---|---|---|
| | extrémités O-SO3- pour 1000 VDF | tensioactif résiduaire ppm/PVDF | Na ppm/PVDF | éthyle sulfonate ppm/PVDF | Metrastat 1h 265°C | moulage de plaque 2h à 230°C | moulage de plaque 9 min à 230°C |
| Comp 1 | 0.04 | 160 | Non détecté | 0 | 50 | 40 | 25 |
| 1 | 0.04 | 160 | 35 | 60 | 29 | 22 | 14 |
| 2 | 0.04 | 180 | 36 | 110 | 27 | 20 | 14 |
| Comp 2 | 0.04 | 500 | 32 | 58 | 50 | 41 | 30 |

## Revendications

1. Procédé de fabrication de PVDF homopolymère ou copolymère par polymérisation radicalaire du fluorure de vinylidène (VDF), et éventuellement d'un comonomère, en dispersion aqueuse en présence d'un agent de transfert, d'un persulfate comme initiateur radicalaire, éventuellement d'un additif tensioactif, éventuellement d'une paraffine, dans lequel :
a) on obtient une dispersion aqueuse de PVDF,
b) on effectue un lavage de la dispersion de l'étape a), éventuellement après l'avoir coagulée, pour abaisser la proportion de tensioactif éventuel dans le PVDF en dessous de 300 ppm, cette proportion étant exprimée par rapport au PVDF séché,
c) on ajoute dans la dispersion lavée en b) de l'acétate de sodium et éventuellement un alkylsulfonate de potassium,
d) on sèche par tout moyen la dispersion de l'étape c) pour récupérer le PVDF en poudre contenant l'acétate de sodium et éventuellement un alkylsulfonate de potassium.

2. Procédé selon la revendication 1 dans lequel l'additif tensioactif est choisi parmi ceux de formule générale : ZCₙF₂ₙCOOM dans laquelle Z est un atome de fluor ou de chlore, n est un nombre entier valant 6 à 13 et M est un atome d'hydrogène ou de métal alcalin ou un groupe ammonium ou un groupe ammonium comportant au moins un substituant alkyle inférieur.

3. Procédé selon l'une quelconque des revendications précédentes dans lequel la proportion d'acétate de sodium est comprise entre 50 et 600 ppm par rapport au PVDF fabriqué.

4. Procédé selon l'une quelconque des revendications précédentes dans lequel l'alkylsulfonate de potassium est choisi parmi l'éthyle, le méthyle, l'isopropyle et le n-propyle sulfonate de potassium.

5. Procédé selon l'une quelconque des revendications précédentes dans lequel la proportion d'alkylsulfonate de potassium est comprise entre 0 et 300 ppm par rapport au PVDF fabriqué.

6. Procédé discontinu ou semi-continu selon l'une des revendications 1 à 5 dans lequel :
• on charge le réacteur de polymérisation avec de l'eau, l'additif tensioactif éventuel et éventuellement une paraffine,
• le réacteur est désaéré pour éliminer l'oxygène,
• le réacteur est porté à la température choisie et on charge le VDF et le monomère éventuel jusqu'à atteindre la pression voulue,
• l'agent de transfert est introduit dans le réacteur soit en totalité soit en partie au départ et en partie au cours de la polymérisation,
• on ajoute le persulfate (l'initiateur) en totalité ou en partie pour démarrer la polymérisation et la baisse de pression qui en résulte est compensée par l'ajout de VDF et du comonomère éventuel,
• le reste éventuel de l'initiateur est ajouté au cours de la polymérisation,
• après introduction de la quantité prévue de VDF et de comonomère éventuel le réacteur est dégazé et on obtient une dispersion aqueuse de PVDF,
• on effectue un lavage de la dispersion aqueuse de PVDF éventuellement après l'avoir coagulée, pour abaisser la proportion de tensioactif éventuel dans le PVDF en dessous de 300 ppm, cette proportion étant exprimée par rapport au PVDF séché,
• on ajoute dans la dispersion lavée de l'acétate de sodium et éventuellement un alkylsulfonate de potassium,
• on sèche par tout moyen la dispersion de l'étape précédente pour récupérer le PVDF en poudre contenant l'acétate de sodium et éventuellement un alkylsulfonate de potassium.

## Claims

1. Process for the manufacture of PVDF homopolymer or copolymer by radical polymerization of vinylidene fluoride (VDF), and optionally of a comonomer, in aqueous dispersion and in the presence of a transfer agent, of a persulphate as radical initiator, optionally of a surface-active additive and optionally of a paraffin wax, in which:
a) an aqueous PVDF dispersion is obtained,
b) the dispersion from stage a) is washed, optionally after having coagulated it, in order to lower the proportion of possible surfactant in the PVDF below 300 ppm, this proportion being expressed with respect to the dried PVDF,
c) sodium acetate and optionally a potassium alkylsulphonate are added to the dispersion washed in b),
d) the dispersion from stage c) is dried by any means in order to recover the PVDF as a powder comprising the sodium acetate and optionally a potassium alkylsulphonate.

2. Process according to Claim 1, in which the surface-active additive is chosen from those of general formula: ZCₙF₂ₙCOOM
in which Z is a fluorine or chlorine atom, n is an integer with a value from 6 to 13 and M is a hydrogen or alkali metal atom or an ammonium group or an ammonium group comprising at least one lower alkyl substituent.

3. Process according to either one of the preceding claims, in which the proportion of sodium acetate is between 50 and 600 ppm with respect to the PVDF manufactured.

4. Process according to any one of the preceding claims, in which the potassium alkylsulphonate is chosen from potassium ethylsulphonate, methylsulphonate, isopropylsulphonate and n-propylsulphonate.

5. Process according to any one of the preceding claims, in which the proportion of potassium alkylsulphonate is between 0 and 300 ppm with respect to the PVDF manufactured.

6. Batchwise or semi-continuous process according to one of Claims 1 to 5, in which:
• the polymerization reactor is charged with water, the optional surface-active additive and optionally a paraffin wax,
• the reactor is deaerated to remove the oxygen,
• the reactor is brought to the chosen temperature and VDF and the optional monomer are charged until the desired pressure is reached,
• the transfer agent is introduced into the reactor, either in its entirety or partly at the start of and partly during the polymerization,
• the persulphate (the initiator) is added, in its entirety or in part, to start the polymerization and the fall in pressure which results therefrom is compensated for by the addition of VDF and of the optional comonomer,
• the possible remaining initiator is added during the polymerization,
• after introduction of the planned amount of VDF and of optional comonomer, the reactor is degassed and an aqueous PVDF dispersion is obtained,
• the aqueous PVDF dispersion is washed, optionally after having coagulated it, in order to lower the proportion of possible surfactant in the PVDF below 300 ppm, this proportion being expressed with respect to the dried PVDF,
• sodium acetate and optionally a potassium alkylsulphonate are added to the washed dispersion,
• the dispersion from the preceding stage is dried by any means in order to recover the PVDF as a powder comprising the sodium acetate and optionally a potassium alkylsulphonate.

## Patentansprüche

1. Verfahren zur Herstellung von PVDF-Homopolymer oder -Copolymer durch radikalische Polymerisation von Vinylidenfluorid (VDF) und gegebenenfalls einem Comonomer in wäßriger Dispersion in Gegenwart eines Kettenübertragungsmittels, eines Persulfats als Radikalinitiator, gegebenenfalls eines Tensids und gegebenenfalls eines Paraffins, bei dem man:
a) eine wäßrige PVDF-Dispersion erhält,
b) die in Schritt a) erhaltene Dispersion gegebenenfalls nach Koagulieren wäscht, um den gegebenenfalls in dem PVDF enthaltenen Tensidanteil unter 300 ppm zu senken, wobei sich dieser Anteil auf das getrocknete PVDF bezieht,
c) die in Schritt b) gewaschene Dispersion mit Natriumacetat und gegebenenfalls einem Kaliumalkylsulfonat versetzt,
d) die in Schritt c) erhaltene Dispersion auf eine beliebige Art und Weise trocknet, um das PVDF als Pulver, das das Natriumacetat und gegebenenfalls ein Kaliumalkylsulfonat enthält, zu gewinnen.

2. Verfahren nach Anspruch 1, bei dem man das Tensid unter denjenigen der allgemeinen Formel ZCₙF₂ₙCOOM, worin Z für ein Fluor- oder Chloratom steht, n für eine ganze Zahl von 6 bis 13 steht und M für ein Wasserstoff- oder Alkalimetallatom oder eine Ammoniumgruppe oder eine Ammoniumgruppe mit mindestens einem Niederalkylsubstituenten steht, auswählt.

3. Verfahren nach einem der vorhergehenden Ansprüche, bei dem der Anteil an Natriumacetat zwischen 50 und 600 ppm, bezogen auf das hergestellte PVDF, liegt.

4. Verfahren nach einem der vorhergehenden Ansprüche, bei dem man das Kaliumalkylsulfonat unter Kaliumethylsulfonat, Kaliummethylsulfonat, Kaliumisopropylsulfonat und Kalium-n-propylsulfonat auswählt.

5. Verfahren nach einem der vorhergehenden Ansprüche, bei dem der Anteil an Kaliumalkylsulfonat zwischen 0 und 300 ppm, bezogen auf das hergestellte PVDF, liegt.

6. Diskontinuierliches oder halbkontinuierliches Verfahren nach einem der Ansprüche 1 bis 5, bei dem man:
• den Polymerisationsreaktor mit Wasser, dem fakultativen Tensid und gegebenenfalls einem Paraffin beschickt,
• den Reaktor zur Entfernung von Sauerstoff entlüftet,
• den Reaktor auf die gewählte Temperatur bringt und mit VDF und dem fakultativen Monomer beschickt, bis der gewünschte Druck erreicht ist,
• das Kettenübertragungsmittel ganz oder teilweise zu Beginn der Polymerisation und teilweise während der Polymerisation einträgt,
• das Persulfat (den Initiator) ganz oder teilweise zugibt, um die Polymerisation zu starten, und den daraus resultierenden Druckabfall durch Zugabe von VDF und dem fakultativen Monomer kompensiert,
• während der Polymerisation den gegebenenfalls verbliebenen Rest des Initiators zugibt,
• nach Eintragen der vorgesehenen Menge an VDF und fakultativem Comonomer den Reaktor entgast und eine wäßrige PVDF-Dispersion erhält,
• die wäßrige PVDF-Dispersion gegebenenfalls nach Koagulieren wäscht, um den gegebenenfalls in dem PVDF enthaltenen Tensidanteil unter 300 ppm zu senken,
• die in dem vorhergehenden Schritt gewaschene Dispersion mit Natriumacetat und gegebenenfalls einem Kaliumalkylsulfonat versetzt,
• die in dem vorhergehenden Schritt erhaltene Dispersion auf eine beliebige Art und Weise trocknet, um das PVDF als Pulver, das das Natriumacetat und gegebenenfalls ein Kaliumalkylsulfonat enthält, zu gewinnen
